Europäisches Patentamt

European Patent Office

Office européen des brevets

(19)

(11) Numéro de publication : **0 103 771**
**B1**

(12)

# FASCICULE DE BREVET EUROPÉEN

(45) Date de publication du fascicule du brevet :
09.09.87

(51) Int. Cl.⁴ : **G 01 M 3/22**, G 01 D 13/10

(21) Numéro de dépôt : **83108295.3**

(22) Date de dépôt : **23.08.83**

(54) Dispositif de mesure et d'affichage du taux Q de fuite pour un détecteur de fuites à gaz traceur.

(30) Priorité : 27.08.82 FR 8214699

(43) Date de publication de la demande :
28.03.84 Bulletin 84/13

(45) Mention de la délivrance du brevet :
09.09.87 Bulletin 87/37

(84) Etats contractants désignés :
**DE FR GB IT NL SE**

(56) Documents cités :
DE-A- 2 713 580
FR-A- 1 428 585
FR-A- 2 313 663
GB-A- 1 054 059
US-A- 3 416 359
**Fiche technique du détecteur de fuite à hélium ASM52 de la Société ALCATEL**
**Le dossier contient des informations techniques présentées postérieurement au dépôt de la demande et ne figurant pas dans le présent fascicule.**

(73) Titulaire : **ALCATEL CIT**
**33, rue Emeriau**
**F-75015 Paris (FR)**

(72) Inventeur : **Morel, Jacques**
**23, avenue de Novel**
**F-74000 Annecy (FR)**
Inventeur : **Tallon, Jacques**
**1 Place Saint-François**
**F-74000 Annecy (FR)**

(74) Mandataire : **Weinmiller, Jürgen et al**
**Lennéstrasse 9 Postfach 24**
**D-8133 Feldafing (DE)**

Jouve, 18, rue St-Denis, 75001 Paris, France

## Description

On sait que dans le but de contrôler l'étanchéité d'un organe tel qu'un réservoir ou d'une installation sous vide on utilise un gaz traceur tel que l'hélium que l'on injecte dans ledit organe ou installation. Dans le cas où de tels organes présentent une fissure, l'hélium débouche de cette dernière et est envoyé dans un dispositif de mesure tel qu'un spectromètre de masse analyseur de gaz qui permet donc selon la quantité d'hélium reçue de déterminer l'importance de ladite fissure.

Un détecteur de fuites connu tel que le détecteur ASM 52 de la Société Alcatel comprend quatre parties :

Une première partie destinée à évacuer l'air de l'organe ou de l'installation à contrôler au moyen notamment d'une pompe primaire par exemple du type à palettes associée à des organes tels que vanne d'isolement de la pompe, vanne d'entrée d'air, manomètre de mesure de pression.

Une deuxième partie destinée à analyser le gaz traceur en provenance de ladite première partie et comportant donc une cellule d'analyse tel qu'un spectromètre de masse, une pompe primaire par exemple à palettes, un dispositif de pompage secondaire du type pompe à diffusion turbo-moléculaire ou ionique, un piège par exemple à azote liquide, et un manomètre de mesure de pressions.

Une troisième partie apte à introduire le mélange gazeux à analyser ou une fraction de ce dernier dans ladite deuxième partie et comportant généralement une vanne à débit réglable.

Enfin une quatrième partie de calcul et d'affichage des résultats donc de l'importance des fuites, par exemple au moyen d'un dispositif électronique approprié.

Or dans les techniques conventionnelles de détection des fuites, ces dernières varient dans une gamme de valeurs étendues que l'on peut évaluer sensiblement de $10^{-11}$ à $10^{3}$ atmosphère cm$^3$/seconde, cette gamme de valeurs étant d'ailleurs exprimée en N décades par les techniciens en matière de vide. La gamme de valeurs précédente correspond donc à 15 décades.

En conséquence, une telle étendue desdites gammes conduit les constructeurs de détecteurs de fuites à mettre en œuvre des montages divers adaptés à la valeur des fuites à détecter.

Pour fixer les idées dans le cas de fuites de faibles valeurs, de l'ordre de $10^{-11}$ à $10^{-5}$ atmosphère cm$^3$/seconde, la totalité du flux gazeux d'hélium est dirigée vers l'analyseur, la vanne de ladite deuxième partie étant entièrement ouverte.

Dans le cas de fuites de valeurs moyennes soit de $10^{-5}$ à 1 atmosphère cm$^3$/seconde, une partie du flux gazeux sera détournée vers la pompe primaire de la première partie du détecteur tandis que la vanne de la deuxième partie dudit détecteur ne sera que partiellement ouverte, ou remplacée par des vannes à plus faible passage gazeux.

Enfin, pour des fuites de valeurs élevées, supérieures à 1 atmosphère cm$^3$/seconde, il s'avère nécessaire de limiter le débit de la vanne de la deuxième partie par tout moyen approprié tel qu'un diaphragme, un tube capillaire ou autre, et même de remplacer ladite vanne par une membrane.

De la sorte, selon le cas, la cellule d'analyse décèle un flux d'hélium q qui la traverse, et qui correspond à la totalité ou à une partie du flux Q débouchant d'une fissure de l'organe ou installation à tester.

La capacité de mesure des circuits électroniques associés à la cellule d'analyse est limitée à un nombre restreint de n décades de valeurs de fuites soit 5 à 6 au maximum.

On connaît également par le document allemand DE-A-2 713 580 un détecteur de fuite à hélium pouvant fonctionner selon deux modes opératoires distincts : un premier dans lequel on fixe une valeur du courant de fuite en agissant sur un appareil d'affichage qui asservi l'ouverture d'une vanne d'entrée jusqu'à ce que le courant d'hélium atteigne cette valeur. Il en résulte que la vanne d'entrée est asservie à la pression d'hélium et que seule la méthode de ressuage ou bien la méthode par immersion globale de la pièce à contrôler est possible. En outre dans une telle méthode, où la vanne d'entrée est asservie à la pression d'hélium, si la fuite est inférieure à la valeur de consigne, on peut atteindre dans l'analyseur une pression totale supérieure à la pression tolérable par l'analyseur provoquant un déclenchement des sécurités.

Dans un second mode opératoire, on ne fixe aucune valeur de consigne et la vanne d'entrée s'ouvre progressivement jusqu'à ce que l'on constate une déviation de l'aiguille sur l'appareil d'affichage. Dans ce type de fonctionnement, le système décrit est également limité au cas de la méthode de ressuage ou de l'immersion globale car il n'y a aucun asservissement de l'ouverture de la vanne d'entrée à une pression maximale totale (air + hélium) de consigne. Dans le système décrit, il n'y a pas d'affichage simultané sur le même appareil de la valeur de la fuite et de l'étendue possible de la fuite mesurable compte tenu du degré d'ouverture de la vanne d'entrée.

Autrement dit dans les réalisations de détecteurs actuelles à nombre restreint de décades, il n'existe pas de solution permettant à l'opérateur de connaître simultanément la valeur exacte de la fuite Q à travers ladite fissure et la gamme de mesure de n décades dans les conditions instantanées de travail. Il en résulte que l'utilisateur pourra envisager une sensibilité de l'appareil de nature à déceler des fuites de l'ordre de $10^{-10}$ atmosphère cm$^3$/seconde, alors qu'en fait une pression d'entrée de $10^{-2}$ atmosphère par exemple, limitera ladite sensibilité à $10^{-5}$ atmosphère cm$^3$/seconde.

La présente invention permet de remédier aux inconvénients cités ci-dessus en permettant à l'opérateur de connaître exactement les possibilités de son appareil.

L'invention a pour objet un dispositif de mesure et d'affichage du taux Q de fuite pour un détecteur de fuites à gaz traceur du type comportant principalement une pompe à vide primaire apte à être connectée ou non à un organe à contrôler, une vanne connectée également audit organe à contrôler et communiquant avec une cellule d'analyse maintenue sous vide par un groupe de pompage comprenant une pompe primaire et une pompe secondaire, ladite vanne comportant un clapet dont le degré d'ouverture est commandé par un moteur asservi à la pression régnant sensiblement à l'entrée de ladite cellule d'analyse, ce degré d'ouverture étant converti en un signal électrique transmis audit dispositif de mesure et d'affichage lui-même asservi à ladite cellule d'analyse, caractérisé en ce que ledit dispositif de mesure et d'affichage comporte un système de signalisation permettant de sélectionner dans une gamme de N décades, une étendue de n décades indiquant l'étendue possible de la fuite mesurable compte tenu du degré d'ouverture de la vanne et d'afficher simultanément dans cette gamme de n décades la valeur de la fuite de l'organe à contrôler.

Selon une réalisation préférée de l'invention, ledit système de signalisation comporte simultanément un ruban gradué sur une étendue de N décades apte à défiler devant une fenêtre s'étendant sur une longueur correspondant à n décades, et une aiguille indicatrice.

Dans une variante de réalisation, le système de signalisation comporte un dispositif lumineux indiquant la portion sélectionnée des n décades de travail parmi l'étendue des N décades, et indiquant simultanément par des moyens lumineux la valeur de la fuite dans cette gamme sélectionnée.

D'autres caractéristiques et avantages de l'invention ressortiront de la description qui suit et en se référant aux dessins annexés dans lesquels :

La figure 1 représente schématiquement un détecteur de fuites auquel s'applique le dispositif selon l'invention.

La figure 2 représente le dispositif d'affichage faisant partie du dispositif selon l'invention.

La figure 3 représente une variante de la figure 2.

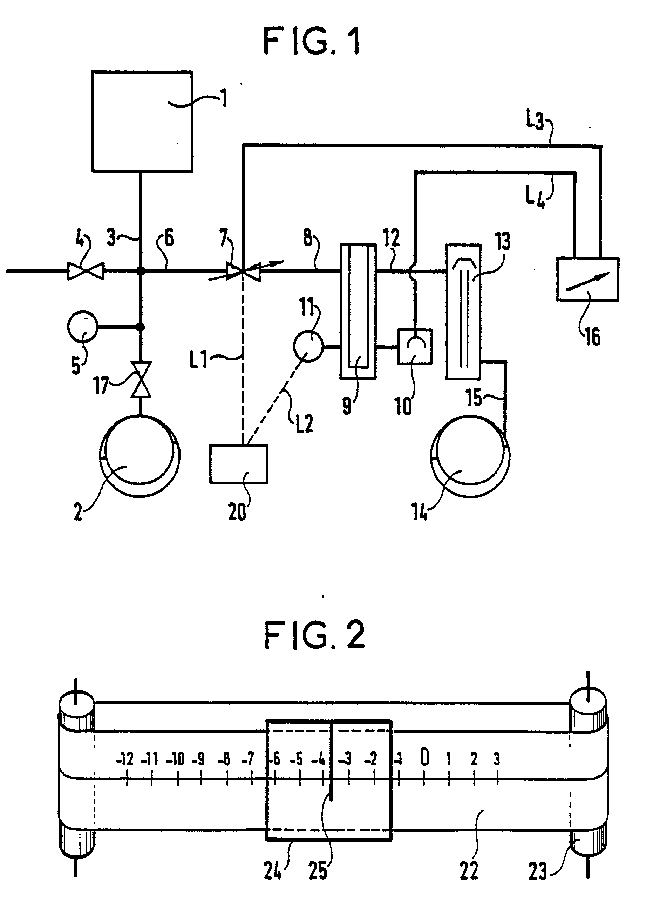

Sur la figure 1, la référence 1 est affectée à un organe par exemple un réservoir dont l'étanchéité doit être contrôlée.

Ce réservoir est connecté à une pompe primaire à palettes 2 par l'intermédiaire d'une conduite 3, une vanne 17 étant intercalée sur la conduite 3 dans le but d'isoler éventuellement la pompe 2. Sur cette conduite 3 sont branchés une vanne d'entrée d'air 4 ainsi qu'un manomètre 5.

La conduite 3 communique par l'intermédiaire d'une conduite 6 avec une vanne 7 d'introduction de gaz vers la cellule d'analyse, qui sera plus particulièrement décrite par ailleurs.

Cette vanne 7 communique au moyen d'une conduite 8 avec un piège à azote liquide 9 au niveau duquel sont connectés une cellule d'analyse 10 tel qu'un spectromètre de masse et un manomètre 11. En outre une conduite 12 met en relation ledit piège 9 avec un dispositif de pompage secondaire 13 lui-même connecté avec une pompe primaire à palettes 14, et cela au moyen de la canalisation 15.

Le dispositif de pompage secondaire 13 est une pompe à diffusion, une pompe turbomoléculaire ou une pompe ionique.

La référence 16 désigne le dispositif électronique de calcul et d'affichage des résultats de mesures de détection conforme à l'invention.

Par ailleurs, la vanne 7 est du type vanne motorisée c'est-à-dire qu'elle comporte un clapet à ouverture progressive dont le profil permet sa mise en œuvre pour des pressions en amont de l'ordre de $10^{-4}$ à 1 mbar. Le déplacement dudit clapet est commandé par un moteur électrique ou pneumatique schématisé en 20 et asservi à la pression du manomètre 11, de telles fonctions étant matérialisées par les lignes en traits tiretés $L_1$ et $L_2$ respectivement. De plus, le déplacement du clapet entraîne un déplacement concomittant du curseur d'un potentiomètre (non représenté) transmettant de la sorte au dispositif électronique 16 un signal représentatif du degré d'ouverture de la vanne 7 une telle fonction étant matérialisée par la ligne $L_3$.

Enfin, la ligne $L_4$ montre que le dispositif électronique 16 est également asservi à la cellule d'analyse 10.

On voit donc en conséquence que ledit dispositif électronique 16 reçoit des informations correspondant au degré d'ouverture ou de fermeture de la vanne 7. L'information ainsi délivrée permet de déplacer par l'intermédiaire de rouleaux 23 un ruban 22 (figure 2) portant une graduation logarithmique sur une étendue de N décades, allant par exemple de $10^{-12}$ à $10^3$ atmosphère cm$^3$/seconde, donc correspondant aux performances limites du détecteur. Sur la figure 2, les chiffres représentés sur la bande 22 constituent les différentes puissances de dix.

Ledit ruban 22 défile devant une fenêtre de lecture 24 qui ne laisse apparaître que le nombre n de décades correspondant à la gamme de lecture possible dans les conditions opératoires, soit 4 à 5 dans l'exemple représenté. L'opérateur est donc ainsi renseigné sur les valeurs minimale et maximale qu'il peut mesurer dans les conditions opérationnelles de l'essai. En outre, ladite fenêtre 24 comporte une aiguille mobile 25 dont la position est asservie, par un dispositif à asservissement potentiométrique, à la sortie de la cellule d'analyse 10 par l'intermédiaire du dispositif 16 donc au flux d'hélium q qui traverse la cellule, ce flux étant amplifié par un amplificateur logarithmique. Cette aiguille 25 affiche donc la valeur exacte de la fuite Q dans la gamme n de mesure apparaissant dans la fenêtre 24.

On voit donc que le dispositif selon l'invention permet d'indiquer à l'opérateur, la valeur exacte du flux Q donc de la fuite de l'organe testé, ainsi que la gamme de mesure possible dans une plage des n décades sélectionnées parmi les N décades telles que définies dans ce qui précède, et cela quelles que soient les pressions d'entrée du flux gazeux.

Un tel dispositif permet de clarifier l'interprétation des signaux délivrés par la cellule d'analyse.

Il trouve des applications avantageuses dans le domaine des détections de fuites par gaz traceur tel que l'hélium ou l'hydrogène.

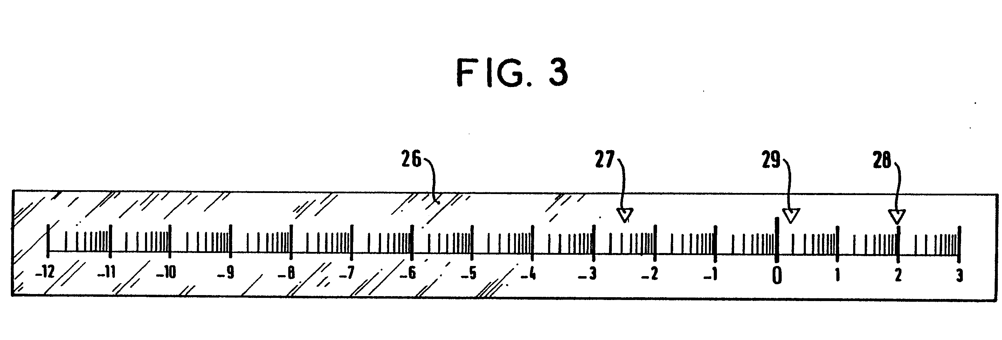

La figure 3 représente une variante possible de la figure 2 dans laquelle les graduations des N décades sont inscrites sur une échelle fixe 26, et la gamme de mesure possible sur une étendue de n décades, dans les conditions actuelles de la mesure, est donnée par deux signaux lumineux mobiles 27 et 28 représentés sous forme de triangles sur la figure 3. Et de même, l'aiguille indicatrice mobile 25 de la valeur de la fuite de la figure 2, est remplacée sur cette variante de la figure 3 par un signal lumineux mobile 29 entre les signaux 27 et 28 indiquant la plage possible de mesure. Ce signal lumineux mobile 29 est également représenté sous la forme d'un triangle.

Sur cette figure, les chiffres indiqués sur l'échelle fixe 26 représentent les différentes puissances de 10 comme sur l'échelle selon la figure 2.

## Revendications

1. Dispositif (16) de mesure et d'affichage du taux de fuite pour un détecteur de fuites à gaz traceur du type comportant principalement une pompe à vide primaire (2) apte à être connectée ou non à un organe à contrôler (1), une vanne (7) connectée également audit organe à contrôler (1) et communiquant avec une cellule d'analyse (10) maintenue sous vide par un groupe de pompage comprenant une pompe primaire (14) et une pompe secondaire (13), ladite vanne (7) comportant un clapet dont le degré d'ouverture est commandé par un moteur (20) asservi à la pression régnant sensiblement à l'entrée de ladite cellule d'analyse (10), ce degré d'ouverture étant converti en un signal électrique transmis audit dispositif (16) de mesure et d'affichage (16) lui-même asservi à ladite cellule (10) d'analyse, ledit dispositif (16) étant caractérisé en ce qu'il comporte un système de signalisation permettant de sélectionner dans une gamme de N décades, une étendue de n décades indiquant l'étendue possible de la fuite mesurable compte tenu du degré d'ouverture de la vanne (7) et d'afficher simultanément dans cette gamme de n décades la valeur de la fuite de l'organe (1) à contrôler.

2. Dispositif selon la revendication 1, caractérisé en ce que ledit système de signalisation comporte simultanément un ruban gradué (22) sur une étendue de N décades apte à défiler devant une fenêtre (24) s'étendant sur une longueur correspondant à n décades, et une aiguille indicatrice (25).

3. Dispositif selon la revendication 1, caractérisé en ce que ledit système de signalisation comporte un dispositif lumineux (26-28) indiquant la portion sélectionnée des n décades de travail parmi l'étendue des N décades, et indiquant simultanément par des moyens lumineux la valeur de la fuite dans cette gamme sélectionnée.

## Claims

1. A device (16) for measuring and displaying the leakage flow rate for a tracer gas leak detector of the type mainly comprising a primary vacuum pump (2) which can be connected or not to a unit (1) to be controlled, a valve (7) also connected to said unit (1) to be controlled and communicating with an analysis cell (10) kept under vacuum by a pumping set comprising a primary pump (14) and a secondary pump (13), said valve (7) comprising a valve flap, the aperture degree of which is controlled by a motor (20) submitted to the pressure essentially present at the inlet of said analysis cell (10), this aperture degree being converted into an electrical signal which is transmitted to said measuring and displaying device (16) which is itself submitted to said analysis cell (10), said device (16) being characterized in that it comprises a signalisation system permitting to select from a range of N decades a range of n decades indicating the possible leak rate which can be measured while taking into account the aperture degree of the valve (7), and to display simultaneously in this range of n decades the value of the leak rate of the unit (1) to be controlled.

2. A device according to claim 1, characterized in that the signalisation system further comprises a scaled strip (22) graduated over N decades which can move in front of a window (24) which extends over a length corresponding to n decades, and an indicator needle (25).

3. A device according to claim 1, characterized in that said signalisation system comprises a luminous device (26-28) indicating the selected portion of n working decades amongst the range of N decades, and simultaneously indicating by light means the value of the leak in this selected portion.

## Patentansprüche

1. Vorrichtung (16) zum Messen und Anzeigen der Leckrate für einen Spürgas-Leckdetektor von der Art, die hauptsächlich eine Vor-Vakuumpumpe (2), die mit einem zu kontrollierenden Organ (1) verbunden sein kann oder auch nicht, ein Ventil (7), das ebenfalls mit dem zu kontrollierenden Organ (1) verbunden und an eine Analysezelle (10) angeschlossen ist, die von einem Pumpaggregat unter Vakuum gehalten wird, welche eine Vorvakuumpumpe (14) und eine sekundäre Pumpe (13) enthält, aufweist, wobei das Ventil (7) eine Ventilklappe aufweist, dessen Öffnungsgrad von einem Motor (20) gemäß im wesentlichen dem am Eingang der Analysezelle (10) herrschenden Druck gesteuert wird, wobei dieser Öffnungsgrad in ein elektrisches Signal umgewandelt wird, das zur Meß- und Anzeigevorrichtung (16) übertragen wird, welche ihrerseits der Analysezelle (10) untergeordnet ist, wobei die Vorrichtung (16) dadurch gekennzeichnet ist, daß sie ein Signalisationssystem aufweist, das es ermöglicht, aus einem Bereich von N Dekaden einen Bereich von n Dekaden auszuwählen, der den möglichen Bereich des zu messenden Lecks unter Berücksichtigung des Öffnungsgrads des Ventils (7) angibt, und gleichzeitig in diesem Bereich von n Dekaden den Leckwert des zu kontrollierenden Organs (1) anzuzeigen.

2. Vorrichtung nach Anspruch 1, dadurch gekennzeichnet, daß das Signalisationssystem auch ein Band (22) mit einer Skala über einen Bereich von N Dekaden, das vor einem Fenster (24) vorbeiläuft, welches sich über eine n Dekaden entsprechende Länge erstreckt, und eine Anzeigenadel (25) aufweist.

3. Vorrichtung nach Anspruch 1, dadurch gekennzeichnet, daß das Signalisationssystem eine Leuchtvorrichtung (26-28) aufweist, die den aus dem Bereich der N Dekaden ausgewählten Abschnitt der n Arbeitsdekaden anzeigt und gleichzeitig durch Leuchtmittel den Leckwert in diesem ausgewählten Abschnitt anzeigt.

# FIG. 1

# FIG. 2

0 103 771

# FIG. 3